Europäisches Patentamt

European Patent Office

Office européen des brevets

(19)

(11) Publication number: **0 172 189**
**B1**

# (12) EUROPEAN PATENT SPECIFICATION

(45) Date of publication of patent specification: **18.01.89**

(51) Int. Cl.⁴: **F 16 J 15/12**

(21) Application number: **85900809.6**

(22) Date of filing: **28.01.85**

(86) International application number:
**PCT/SE85/00032**

(87) International publication number:
**WO 85/03334 01.08.85 Gazette 85/17**

## (54) SEALING RING OF THE COMPOSITE TYPE.

(30) Priority: **30.01.84 SE 8400438**

(43) Date of publication of application:
**26.02.86 Bulletin 86/09**

(45) Publication of the grant of the patent:
**18.01.89 Bulletin 89/03**

(84) Designated Contracting States:
**AT BE CH DE FR GB LI LU NL SE**

(56) References cited:
**DE-A-2 437 989**
**DE-A-2 601 735**
**SE-B- 360 916**
**US-A-3 698 728**

(73) Proprietor: **BORG, Bertil**
**Kastberga 2**
**S-241 00 Eslöv (SE)**
(73) Proprietor: **LANDAEUS, Kjell**
**Domaine de St. Andrieu 3**
**F-02670 Villeneuve-Loubet (FR)**

(72) Inventor: **BORG, Bertil**
**Kastberga 2**
**S-241 00 Eslöv (SE)**
Inventor: **LANDAEUS, Kjell**
**Domaine de St. Andrieu 3**
**F-02670 Villeneuve-Loubet (FR)**

(74) Representative: **Ström, Tore et al**
**Ström & Gulliksson AB Studentgatan 1 P.O. Box 4188**
**S-203 13 Malmö (SE)**

## Description

The present invention relates to a sealing ring of the composite type.

When an element of a machinery construction is mounted to engage another element and a through passage for conducting hydraulic fluid in a hydraulic system extends through the elements across the interface between the elements, a seal usually is provided around the passage in the interface between the elements by means of a sealing ring, usually an O-ring of an elastomer, which is located in an enlargement of the passage in one element.

It has been noted at several occasions that such a sealing ring may be dislocated from its position in the enlargement and may be carried away by the hydraulic fluid flowing through the passage. The reason for this seems not to be fully explained. However, the inventors of the present invention do not think it unlikely that the sealing ring is compressed elastically under the pressure of the hydraulic fluid in the passage and then when the pressure is relieved or substantially reduced, recoils by the inherent elasticity thereof and then simply springs out of the seat thereof in the enlargement to land in the passage and be carried away by the hydraulic fluid flowing through the passage.

Said disadvantage can be overcome by slotting an annular groove for the sealing ring in the surface of one element engaging the other element, concentrically around the passage. However, such machining means a considerable increase of costs and therefore is no attractive solution of the problem.

The purpose of the invention is to solve the problem in a simple manner without structural modifications of one or the other of the two elements, and this is achieved according to the invention by providing a sealing ring of the composite type.

US—A—3,687,465 (SE—B—360916) shows a sealing ring of the composite type comprising an O-ring of an elastomer and a groove rigid support ring receiving the O-ring, which is disposed to receive in the groove the O-ring, the cross-sectional form of the groove being adapted to the cross-sectional form of the O-ring.

The composite sealing ring of the invention is of this type.

In a first embodiment of the sealing ring of the invention the support ring has a smaller axial dimension than the O-ring. The features of this embodiment appear from claim 1.

In a second embodiment of the sealing ring of the invention the support ring has an equal axial dimension to that of the O-ring. The features of this embodiment appear from claim 2.

Including the features of the invention the sealing ring of the composite type itself is constructed such that said disadvantage cannot arise. No modification of the two elements is necessary; the sealing ring of the composite type can be mounted as any other sealing ring in the conventional enlargement of the passage in one element.

Sealing rings of the composite type are previously known per se and are disclosed, e.g. in DE—A—1,750,182 and US—A—3,918,726. However, these specifications relate to specific embodiments wherein a stiffener is integrated with an elastomer to form a unitary sealing ring. According to the invention, a conventional O-ring of an elastomer is used as a separate element in combination with the support ring.

It should also be mentioned that according to FR—C—1,240,659 efforts have been made to solve the problem referred to herein by providing an insert of L-shaped cross section, which is located in the enlargement of the passage in one element with one flange engaging the bottom of the enlargement while the other flange forms a partition between the enlargement and the passage an O-ring of an elastomer being located in the annular groove formed by the enlargement and the insert. In this manner the slotting of a groove can be dispensed with, but the solution is no good, because the insert must be adapted to the enlargement in each specific case and the enlargement must be made larger so as to receive the O-ring as well as the insert if the cross-sectional area of the O-ring shall be as large as the cross-sectional area of the O-ring when this ring only is located in the enlargement. Such a modification of the enlargement is not always convenient or even possible. In any case it is completely clear that such an insert cannot always be mounted in existing machinery constructions. However, the sealing ring of the composite type according to the invention can always be used quite easily.

In order to explain the invention in more detail the invention will be described with reference to the accompanying drawing in which

Fig. 1 is a fragmentary cross-sectional view of two machine elements forming a through passage and being provided with the sealing ring of the composite type according to the first embodiment of the invention,

Fig. 2 is an enlarged cross-sectional view of the sealing ring, and

Fig. 3 is a plan view of the sealing ring in Fig. 2.

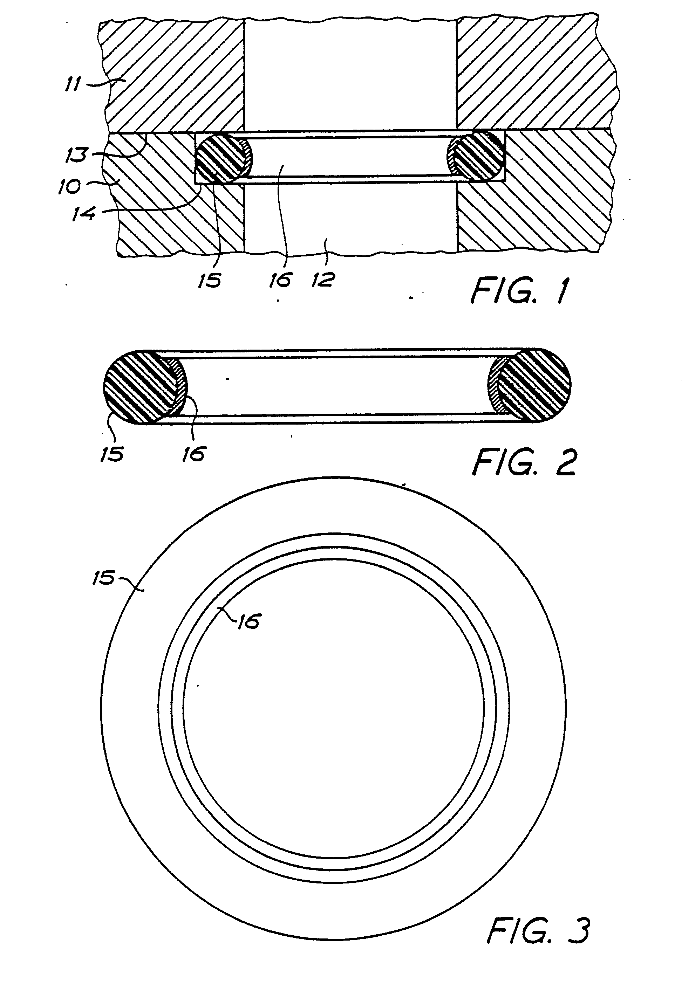

In Fig. 1 of the drawing, two machine elements 10 and 11 are shown which are engaged one with the other at flat surfaces and are clamped in one way or the other. A passage 12 extends through the two machine elements and can form part of a hydraulic system. To seal in the interface 13 between the two elements an enlargement 14 of the passage 12 is provided in the element 10, said enlargement being open in the surface of the element 10, which engages the element 11 at the interface 13. A sealing ring of the composite type according to the invention is located in the enlargement 14 and comprises a conventional O-ring 15 of an elastomer, e.g. rubber, having circular cross-sectional shape, and a rigid support ring 16 of metal or plastic material, forming an outside groove. The O-ring is disposed on the outside of the support ring and is received by the outside groove of the support ring, which is curved according to the circular shape of the O-ring. In other words, the arrangement is similar to a wheel tyre disposed on the outside of a wheel rim. The support ring 16 has a smaller axial dimension than the O-ring 15 in order that the O-ring will be slightly compressed between the two machine elements 10 and 11 without this being obstructed by the support ring 16.

Thus, the O-ring 15 can be of a common standard embodiment and can be located and arranged in the same manner as such a standard ring without being obstructed by the support ring 16 which is a very simple element increasing the cost of the sealing ring insignificantly but preventing effectively the O-ring 15 from leaving the enlargement 14. The O-ring can fit loosely on the support ring but there is nothing to prevent it these two rings being permanently interconnected in one way or the other. Either the rings are interconnected or not they can be handled as a unit.

The support ring 16 of the second embodiment of the invention has the same axial length as the O-ring 15 but in that case through apertures are provided in the support ring between the inside and outside surfaces thereof in order that pressurized hydraulic fluid in the passage 12 can affect the O-ring and compress said ring so as to engage sealingly the elements 10 and 11, and in order that pressurized fluid will not be trapped between the O-ring and the support ring.

### Claims

1. Sealing ring of the composite type comprising an O-ring (15) of an elastomer and a grooved rigid support ring (16) receiving the O-ring, which has a smaller axial dimension than the O-ring and is disposed to receive in the groove the O-ring, the cross-sectional form of the groove being adapted to the cross-sectional form of the O-ring, characterized in that the support ring (16) is disposed with the groove in the radially outer curved surface thereof to receive in the groove like a wheel rim the O-ring (15) on the outside of the support ring.

2. Sealing ring of the composite type comprising an O-ring (15) of an elastomer and a grooved rigid support ring (16) receiving the O-ring, which is disposed to receive in the groove the O-ring, the cross-sectional form of the groove being adapted to the cross-sectional form of the O-ring, characterized in that the support ring (16) having an equal axial dimension to that of the O-ring is disposed with the groove in the radially outer curved surface thereof to receive in the groove like a wheel rim the O-ring (15) on the outside of the support ring, and that the support ring encircled by the O-ring on the outside thereof has a pressure equalizing connection between the inside and outside surfaces thereof.

### Patentansprüche

1. Dichtring vom Verbundstofftyp, der einen O-Ring (15) aus einem Elastomer und einen den O-Ring aufnehmenden mit Nut versehenen starren Stützring (16) umfaßt, der eine kleinere axiale Abmessung als der O-Ring aufweist und so angeordnet ist, daß er den O-Ring in der Nut aufnimmt, wobei die Querschnittsform der Nut der Querschnittsform des O-Ringes angepaßt ist, dadurch gekennzeichnet, daß der Stürzring (16) mit der Nut in seiner radial gekrümmten Außenoberfläche so angeordnet ist, daß er auf der Außenseite des Stützringes den O-Ring (15) in der Nut wie einen Radreifen aufnimmt.

2. Dichtring vom Verbundstofftyp, der einen O-Ring (15) aus einem Elastomer und einen den O-Ring aufnehmenden mit Nut versehenen starren Stützring (16) umfaßt, der so angeordnet ist, daß er in der Nut den O-Ring aufnimmt, wobei die Querschnittsform der Nut der Querschnittsform des O-Ringes angepaßt ist, dadurch gekennzeichnet, daß der Stützring (16) mit der gleichen axialen Abmessung wie der O-Ring mit der Nut in seiner radial gekrümmten Außenoberfläche so angeordnet ist, daß er den O-Ring (15) in der Nut auf der Außenseite des Stützringes wie einen Radschlauch aufnimmt, und daß der Stützring, der auf seiner Außenoberfläche vom O-Ring umgeben wird, zwischen seiner Innen- und Außenoberfläche eine druckausgleichende Verbindung aufweist.

### Revendications

1. Bague d'étanchéité de type composite comprenant un joint torique (15) en élastomère et une bague de soutien rigide (16) pourvue d'une gorge, recevant le joint torique, cette bague (16) ayant une dimension axiale plus petite que celle du joint torique et étant disposée pour recevoir le joint torique dans la gorge, la section de la gorge étant adaptée à celle du joint torique, caractérisée en ce que la bague de soutien (16) est disposée avec la gorge dans sa surface incurvée radialement extérieure pour recevoir dans la gorge, à la manière d'une jante de roue, le joint torique (15) sur l'extérieur de la bague de soutien.

2. Bague d'étanchéité de type composite comprenant un joint torique (15) en élastomère et une bague de soutien rigide (16) pourvue d'une gorge, recevant le joint torique, ladite bague étant agencée pour recevoir le joint torique dans la gorge, le section de la gorge étant adaptée à celle du joint torique, caractérisée en ce que la bague de soutien (16) ayant une dimension axiale égale à celle du joint torique est disposée avec la gorge dans sa surface incurvée radialement extérieure pour recevoir dans la gorge, à la manière d'une jante de roue, le joint torique (15) sur l'extérieur de la bague de soutien, et en ce que la bague de soutien encerclée par le joint torique sur son pourtour a une connexion égalisatrice de pression entre ses surfaces intérieure et extérieure.

FIG. 1

FIG. 2

FIG. 3